(19) Europäisches Patentamt
European Patent Office
Office européen des brevets

(11) **EP 3 709 104 B1**

(12) **FASCICULE DE BREVET EUROPEEN**

(45) Date de publication et mention de la délivrance du brevet:
**15.05.2024 Bulletin 2024/20**

(21) Numéro de dépôt: **20159910.7**

(22) Date de dépôt: **27.02.2020**

(51) Classification Internationale des Brevets (IPC):
**G04B 35/00** (2006.01) **G04B 13/02** (2006.01)

(52) Classification Coopérative des Brevets (CPC):
**G04B 35/00; G04B 13/027**

(54) **ENGRENAGE HORLOGER**

ZAHNRADGETRIEBE EINES UHRWERKS

CLOCK MOVEMENT GEAR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.03.2019 EP 19160248**

(43) Date de publication de la demande:
**16.09.2020 Bulletin 2020/38**

(73) Titulaire: **ROLEX SA**
**1211 Genève 26 (CH)**

(72) Inventeur: **BEHREND, Raoul**
**1260 Nyon (CH)**

(74) Mandataire: **Moinas & Savoye SARL**
**27, rue de la Croix-d'Or**
**1204 Genève (CH)**

(56) Documents cités:
**EP-A1- 2 453 321     EP-A1- 2 672 335**
**EP-B1- 2 453 321     CH-A2- 712 143**

• **Anonymous: "Engrenages cylindriques à denture droite [Carrefour numérique2 - fablab]", , 25 septembre 2017 (2017-09-25), XP055621233, Extrait de l'Internet: URL:http://carrefour-numerique.cite-scienc es.fr/fablab/wiki/doku.php?id=ressources:m ecanique:engranges_denture_droite#distance _entre_les_axes [extrait le 2019-09-11]**

**Description**

L'invention concerne un engrenage horloger. L'invention concerne aussi un mécanisme horloger comprenant un tel engrenage horloger. L'invention concerne aussi un mouvement horloger comprenant un tel engrenage horloger. L'invention concerne encore une pièce d'horlogerie comprenant un tel engrenage horloger. L'invention concerne enfin un procédé de réalisation d'un tel engrenage horloger.

Dans le domaine de l'horlogerie, il est connu de déterminer le profil des dents des roues et des pignons sur la base de courbes géométriques telles que la cycloïde, l'épicycloïde, l'hypocycloïde ou la développante de cercle. Les roues et les pignons ainsi obtenus sont définis de façon à transmettre une vitesse de rotation qui demeure sensiblement constante au cours d'une menée de dent. Des profils de denture ayant la propriété de transmettre un couple sensiblement constant au cours d'une menée de dent sont également connus.

Les profils de denture conventionnels sont ainsi définis de façon à répondre à des objectifs de vitesse et/ou de couple. Il en résulte au sein des engrenages connus de l'art antérieur des jeux angulaires plus ou moins conséquents en fonction de l'entraxe des roues dentées. Dans le cas particulier d'une roue liée cinématiquement à un rouage de finissage d'un mouvement de base (en dérivation), qui est prévue pour faire afficher, par exemple, une information dérivée de l'heure, de tels jeux peuvent induire des risques de chevrotement de l'organe d'affichage de l'information dérivée de l'heure, à savoir un déplacement saccadé et irrégulier de l'organe d'affichage de l'information dérivée de l'heure.

Des solutions connues de l'art antérieur proposent d'adjoindre une friction au sein d'une chaîne cinématique montée en dérivation de la chaîne de finissage du mouvement de base, de manière à générer un couple résistif à l'encontre de l'organe d'affichage de l'information dérivée de l'heure. De telles solutions, divulguées par exemple par les demandes de brevet CH506824 et EP0482443, ne sont toutefois pas optimales dans la mesure où celles-ci peuvent notamment engendrer une baisse d'amplitude ou des variations d'amplitude des oscillations du balancier et donc une dégradation des performances chronométriques. Cette solution augmente aussi la consommation d'énergie du mouvement.

La demande de brevet EP2453321 divulgue un profil spécifique de denture ayant la propriété de transmettre un couple sensiblement constant au cours d'une menée de dent. Un tel profil ne permet pas de minimiser autant que faire se peut les jeux angulaires au cours d'une menée de dent d'un tel engrenage.

La demande de brevet EP1555584 concerne un mobile denté à rattrapage de jeux, dont les dents sont dotées d'au moins un élément élastique. Si un tel composant permet avantageusement de se substituer au ressort de friction, il reste néanmoins fragile en regard d'une roue à denture rigide. Par ailleurs, les jeux angulaires sont minimisés, voire annulés, sous l'effet de la compression des dents, cette compression pouvant varier selon les variations d'entraxe affectant ainsi la consommation énergétique du mouvement auquel prend part ledit mobile. Une telle solution est donc perfectible.

La demande de brevet EP2053474 concerne une architecture de chronographe qui présente la particularité d'intégrer un mobile d'embrayage vertical au sein même de la chaîne de finissage du mouvement de base. Il est ainsi monté en série entre l'organe moteur et l'organe réglant du mouvement de base, et non en dérivation. De la sorte, la trotteuse de seconde de chronographe n'est plus soumise à des déplacements angulaires aléatoires, et ce indépendamment de tout ressort de friction. Une telle architecture reste néanmoins très spécifique, et requiert au moins un mobile supplémentaire dans la chaîne de finissage du mouvement de base, ce qui risque de dégrader son rendement global.

La demande de brevet WO2017157764 vise à pallier la problématique de chevrotement d'un organe d'affichage par le biais d'un engrenage dont les dentures des roues présentent la particularité d'être munies d'un module inférieur à 0,05 mm. Ce document ne décrit pas de profil spécifique défini dans l'objectif d'une minimisation des jeux angulaires et/ou d'une minimisation d'une variation des jeux angulaires en fonction de l'entraxe. Par ailleurs, de telles roues sont peu robustes et ne peuvent *a priori* pas être réalisées par le biais de moyens de fabrication conventionnels.

Le but de l'invention est de fournir un engrenage horloger permettant d'améliorer les engrenages horlogers connus de l'art antérieur. En particulier, l'invention propose un engrenage horloger permettant de limiter le jeu d'engrenage, en particulier de limiter la sensibilité du jeu aux variations d'entraxe de l'engrenage.

Selon l'invention, un engrenage horloger est défini par la revendication 1.

Différents modes de réalisation de l'engrenage sont définis par les revendications 2 à 10.

Selon l'invention, un mécanisme horloger est défini par la revendication 11.

Selon l'invention, un mouvement horloger est défini par la revendication 12.

Selon l'invention, une pièce d'horlogerie est définie par la revendication 13.

Selon l'invention, un procédé de réalisation d'un engrenage est défini par la revendication 14.

Un mode d'exécution du procédé de réalisation est défini par la revendication 15.

Selon l'invention, un engrenage peut être obtenu par la mise en oeuvre du procédé selon l'une des revendications 14 et 15.

Les figures annexées représentent, à titre d'exemples, trois modes de réalisation d'une pièce d'horlogerie selon l'invention.

Les figures 1 et 2 illustrent un engrenage connu de l'art antérieur.

La figure 3 est un graphique représentant les variations du jeu angulaire de l'engrenage des figures 1 et 2 sur un pas et pour différentes valeurs d'entraxe.

Les figures 4 à 7 illustrent un premier mode de réalisation d'une pièce d'horlogerie comprenant un premier mode de réalisation d'engrenage.

La figure 8 est un graphique représentant les variations du jeu angulaire du premier mode de réalisation de l'engrenage sur un pas et pour différentes valeurs d'entraxe.

La figure 9 illustre un deuxième mode de réalisation d'un engrenage utilisé dans un deuxième mode de réalisation de la pièce d'horlogerie.

La figure 10 est un graphique représentant les variations du jeu angulaire du deuxième mode de réalisation de l'engrenage sur un pas et pour différentes valeurs d'entraxe.

La figure 11 illustre un troisième mode de réalisation d'un engrenage utilisé dans un troisième mode de réalisation de la pièce d'horlogerie.

La figure 12 est un graphique représentant les évolutions du jeu angulaire maximum du troisième mode de réalisation de l'engrenage en fonction des variations d'entraxe de l'engrenage.

La figure 13 illustre une variante d'engrenage.

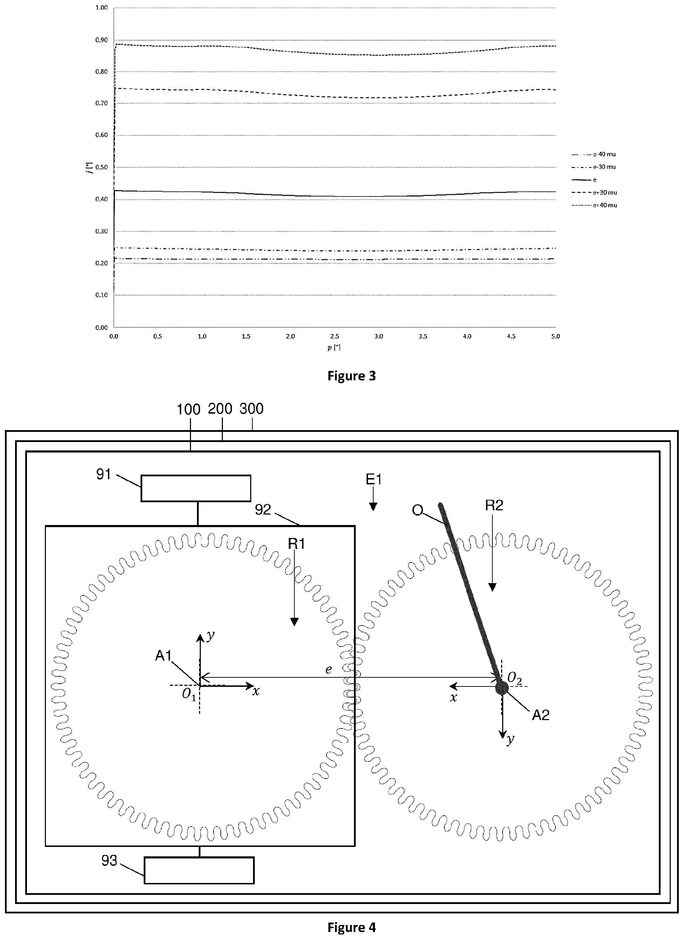

Un premier mode de réalisation d'une pièce d'horlogerie 300 est décrit ci-après en référence aux figures 4 à 8. La pièce d'horlogerie 300 est, par exemple, une montre, en particulier une montre bracelet.
La pièce d'horlogerie comprend un mode de réalisation d'un mouvement horloger 200. Le mouvement horloger peut être du type électronique ou mécanique, en particulier automatique.
Le mouvement horloger comprend un mode de réalisation d'un mécanisme horloger 100. Ce mécanisme peut être un mécanisme d'affichage d'une information temporelle ou dérivée du temps, ou d'affichage d'une information horaire ou dérivée de l'heure, ou d'affichage d'une information d'une fonction non liée au temps. En particulier, le mécanisme peut être lié mécaniquement au rouage de finissage du mouvement, en dérivation de ce rouage. Par exemple, le mécanisme d'affichage peut comprendre une minuterie, un module de chronographe, un module de compte à rebours, un rouage d'affichage d'un module de chronographe ou d'un module de compte à rebours, ou encore un système d'affichage comprenant un râteau engrenant avec une roue dentée liée mécaniquement à une aiguille d'affichage. Alternativement, le mécanisme d'affichage peut, par exemple, comprendre un mécanisme d'affichage d'une information d'un altimètre ou d'un profondimètre.
Le mécanisme horloger 100 comprend un engrenage E1 selon un premier mode de réalisation.
L'engrenage E1 comprend une première roue dentée R1 incluant des premières dents d1 symétriques et une deuxième roue dentée R2 incluant des deuxièmes dents d2 symétriques.
La première roue dentée est montée mobile en rotation autour d'un premier axe A1. La deuxième roue dentée est montée mobile en rotation autour d'un deuxième axe A2. Les première et deuxième roues dentées sont, par exemple, montées sur un même bâti. Les premier et deuxième axes sont de préférence parallèles ou sensiblement parallèles. L'entraxe e entre les premier et deuxième axes est tel que les première et deuxième roues engrènent l'une avec l'autre.
Chacune des premières et deuxièmes dents est conformée et/ou agencée de sorte que le jeu primitif $J$ de l'engrenage est inférieur à $0,3 \cdot m$, voire inférieur à $0,25 \cdot m$, voire inférieur à $0,2 \cdot m$, voire inférieur à $0,15 \cdot m$, voire inférieur à $0,1 \cdot m$, voire inférieur à $0,08 \cdot m$ pour un entraxe $e$ nominal, avec $m$ le module de la roue dont fait partie la dent.
Ces considérations des trois paragraphes ci-dessus sont de préférence également valables pour un deuxième mode de réalisation d'un engrenage E2 comprenant une première roue dentée R1' et une deuxième roue dentée R2' et pour un troisième mode de réalisation d'un engrenage E3 comprenant une première roue dentée R1" et une deuxième roue dentée R2". Ces deux autres modes de réalisation sont mentionnés plus bas.
Autrement dit, l'engrenage E1 présente des profils P1, P2 de dents ou de dentures d'une roue menante et d'une roue menée, ayant la propriété de minimiser autant que faire se peut les jeux angulaires au cours d'une menée de dent, tout en étant très peu sensibles aux variations d'entraxe.De manière avantageuse, les propriétés en matière de rendement et d'usure d'un tel engrenage peuvent également être optimisées.

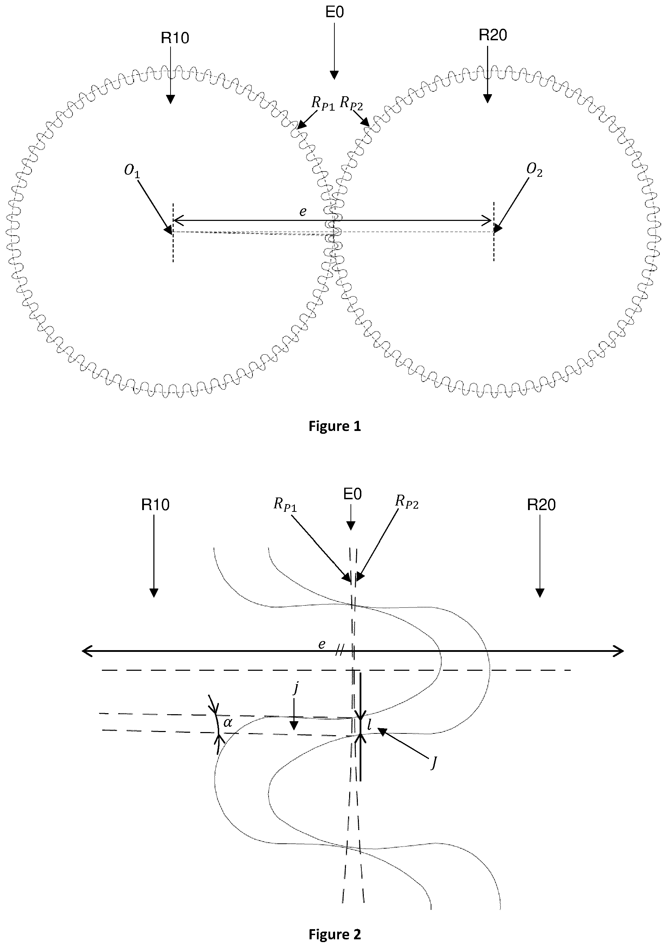

Par « jeu angulaire *j* », nous entendons, à entraxe *e* donné, l'ébat angulaire dont peut tourner librement une première roue R10 relativement à une deuxième roue R20 bloquée selon une orientation spécifiée, soit dans une position donnée. A titre d'illustrations explicatives, les figures 1 et 2 illustrent de telles roues R10 et R20 d'un engrenage E0, dont les profils des dents sont définis selon la norme NIHS 20-25 connue de l'art antérieur. Le jeu *j* est un angle $\alpha$ qui peut s'exprimer en degrés (ou en radians) comme représenté sur les figures 1 et 2. Dans un cas particulier, le jeu *j* peut notamment être défini en fonction du jeu primitif *J* .

Par « jeu primitif *J* », nous entendons, à entraxe e nominal, une longueur maximale d'arc *l* que peut parcourir un point sur un cercle primitif ($R_{P2}$ sur la figure 2) de la première roue R10 relativement à la deuxième roue R20 bloquée selon une orientation spécifiée, tel que défini par la norme ISO 1122-1 :1998. Ainsi, le jeu *J* est une longueur qui peut s'exprimer notamment en millimètres. Le jeu *J* peut également s'exprimer en fonction du pas *p* ou du module *m* des roues R10, R20 prenant part à l'engrenage E0.

Le jeu *j* angulaire peut varier en fonction de l'orientation respective des première et deuxième roues R10 et R20. Ainsi, sur une menée de dents, le jeu *j* est amené à évoluer. Pour un engrenage donné, le plus grand jeu angulaire *j* est dénommé $j_{max}$. à entraxe e nominal dudit engrenage, le jeu angulaire $j_{max}$ déterminé sur l'une ou l'autre des roues R10, R20 s'exprime comme suit :

$$j_{max} = \frac{J_{1,2}}{R_{P1,2}}$$

avec $j_{1,2}$ exprimé en radians, et $R_{P1,2}$ les rayons primitifs respectifs des roues R10, R20.

Le jeu *j* peut être défini par une ou plusieurs paires de dents selon les profils choisis pour les dents de chacune des roues prenant part à l'engrenage.

Un jeu *j* angulaire est nécessaire pour mettre en oeuvre l'engrènement des roues R10 et R20. Néanmoins, un jeu *j* angulaire trop conséquent risque de dégrader la qualité de la transmission du mouvement de la roue menante à la roue menée, ce qui pourrait se traduire par des vibrations ou des saccades de la roue menée. Par ailleurs, une augmentation de l'entraxe du fait des tolérances de fabrication et d'assemblage risque d'induire une augmentation du jeu *j* angulaire. Il convient donc de réduire autant que faire se peut le jeu *j* angulaire à entraxe nominal d'un engrenage. Toutefois, une minimisation trop conséquente du jeu *j* angulaire à entraxe nominal pourrait induire des risques de blocage de l'engrenage à entraxe minimal du fait des tolérances de fabrication et d'assemblage.

Il s'avère que les profils horlogers conventionnels ne satisfont pas à la définition d'un engrenage dont les roues présentent un jeu angulaire le plus constant possible quel que soit l'entraxe. Plus spécifiquement, les profils horlogers conventionnels ne satisfont pas à la définition d'un engrenage dont les roues présentent un jeu angulaire le plus faible possible tout en étant le plus constant possible quel que soit l'entraxe.

Les engrenages E1, E2, E3 objets du présent document sont configurés de sorte que les profils des dentures d'une roue menante et d'une roue menée minimisent autant que faire se peut les jeux angulaires au cours d'une menée de dent, tout en étant très peu sensibles aux variations d'entraxe induites par les processus industriels de fabrication et les moyens de positionnement des moyens de guidage de ces roues, par exemple pour un entraxe variant sur une plage [*e* - 20$\mu$m, *e* + 60$\mu$m], *e* étant l'entraxe nominal.

Les géométries des dentures des engrenages E1, E2, E3 selon l'invention permettent typiquement la mise en oeuvre d'un engrenage dont les roues présentent un jeu primitif *J* inférieur à 0,3 - *m*, voire inférieur à 0,25 · *m*, voire inférieur à 0,2 · *m*, voire inférieur à 0,15 · *m*, voire inférieur à 0,1 · *m*, voire inférieur à 0,08 · *m* pour l'entraxe *e* nominal, avec :

$$m = \frac{2\,e}{z_1 + z_2}$$

où $z_1$ et $z_2$ sont les nombrages respectifs des roues R1, R1', R1''' et R2, R2', R2" prenant part à l'engrenage considéré, à savoir le nombre de dents de chacune des roues R1, R1 ', R1''' et R2, R2', R2".

A titre d'exemple, le profil horloger défini selon la norme NIHS 20-25 permet la mise en oeuvre d'un engrenage dont les roues présentent un jeu primitif plus important.

Les géométries des profils des dentures selon l'invention permettent également une minimisation de la variation du jeu angulaire en fonction de la variation d'entraxe.

Préférentiellement, le module *m* est supérieur ou égal à 0,05 mm de façon à mettre en oeuvre un engrenage robuste pouvant notamment transmettre un couple minimal prédéterminé.

Le « profil » d'une denture ou d'une dent d'une roue peut être défini par l'intersection des surfaces de la denture ou des dents avec un plan P perpendiculaire à l'axe de rotation de la roue.

Pour atteindre le but de minimisation du jeu primitif et de minimisation de la variation du jeu angulaire, les profils des dents ou dentures peuvent présenter la particularité de comporter au moins une portion fonctionnelle PF dont la forme ou le profil est un arc de cercle particulier. Sur la base des travaux de la demanderesse, il a été constaté, en effet, qu'un engrenage doté de roues dont l'une au moins est munie de dents dont chacune est dotée d'une portion fonctionnelle définie par un tel arc de cercle, présente un jeu angulaire pouvant être minimisé et rendu sensiblement constant en fonction de l'entraxe dudit engrenage.

Par « portion fonctionnelle PF », nous entendons une zone du profil d'une dent qui est conformée pour permettre une minimisation du jeu angulaire et qui est prévue pour coopérer, au moins partiellement, par contact de façon à participer à l'engrènement d'un engrenage.

Dans un souci de simplification de la définition de chacun des profils des dents des roues R1, R1', R1" et R2, R2', R2", les roues R1', R1" pourront être plus simplement référencées R1, et les roues R2', R2" plus simplement référencées R2.

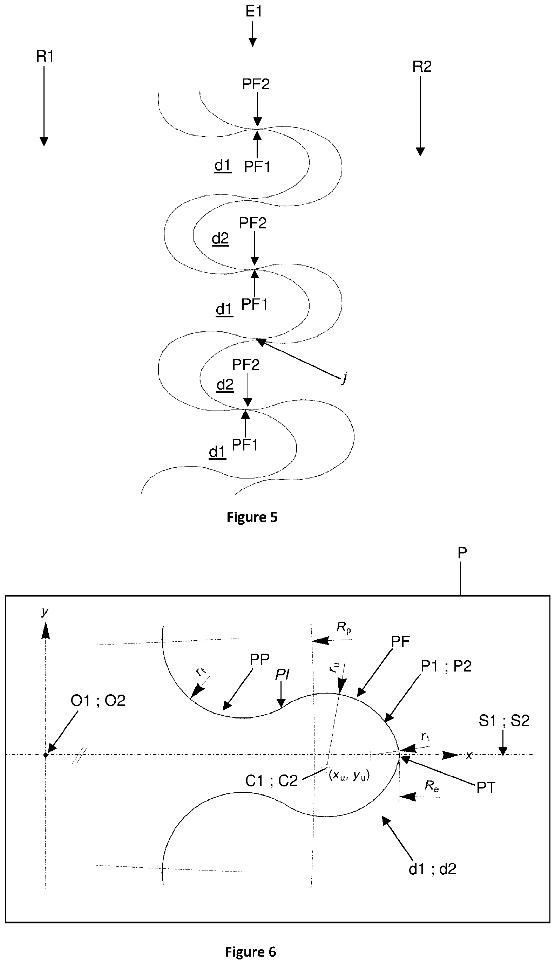

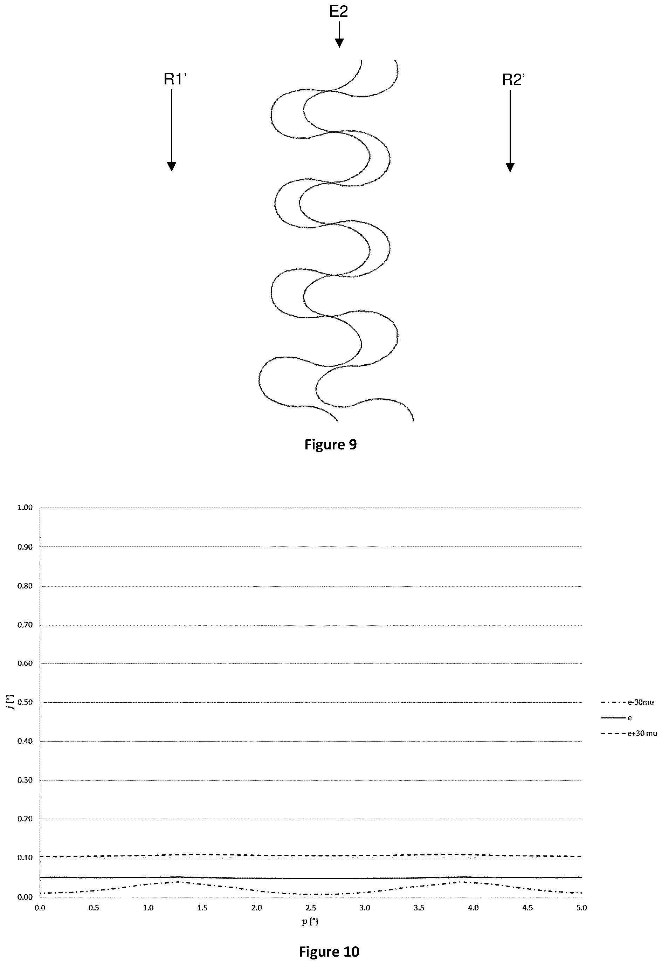

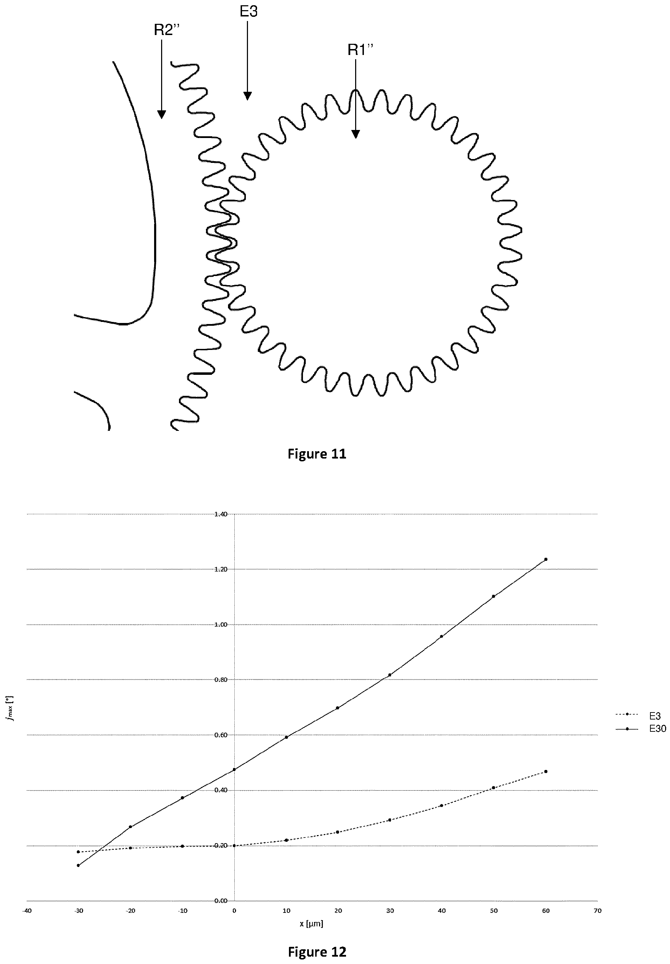

Préférentiellement, dans le mode de réalisation des figures 4 à 7, dans le mode de réalisation de la figure 9 et dans le mode de réalisation de la figure 11, les profils des dentures des roues R1 et R2 sont définis de telle sorte qu'une première portion fonctionnelle PF1 de la première roue R1, caractérisée par un premier arc de cercle, coopère par contact avec une deuxième portion fonctionnelle PF2 de la deuxième roue R2, caractérisée par un deuxième arc de cercle, comme représenté sur la figure 5. Les première et deuxième portions fonctionnelles PF1, PF2 peuvent notamment coopérer par contact sur la ligne des centres passant par les centres respectifs $O_1$, $O_2$ des roues R1, R2. De préférence, les portions fonctionnelles PF1 et PF2 sont caractérisées par des arcs de cercle ayant un même rayon de courbure $r_u$ pour un engrenage de rapport 1 :1.

De préférence, l'arc de cercle de rayon $r_u$ et de centre C1, C2 de coordonnées $(x_u, y_u)$ peut être déterminé comme suit dans un repère cartésien orthonormé direct défini par un triplet $(O_1, \vec{e}_x, \vec{e}_y)$ ou $(O_2, \vec{e}_x, \vec{e}_y)$, comme représenté sur la figure 6. $O_1$ ou $O_2$ coïncide avec l'axe A1 ou A2 de rotation de la roue R1 ou R2 considérée, l'axe A1 ou A2 étant représenté sur la figure 4. $\vec{e}_x$ est un vecteur unitaire colinéaire à l'axe de symétrie S1, S2 d'une dent d1, d2 dotée de ladite portion fonctionnelle PF1 ou PF2. $\vec{e}_y$ est un vecteur unitaire perpendiculaire à $\vec{e}_x$.

$$r_u = p_{i1} \frac{2\pi R_p}{z}$$

et :

$$x_u = p_{i2}\, r_u + R_p$$

$$y_u = -p_{i3}\, r_u$$

avec :

$z$ , le nombre de dents de la roue R1 ou R2 considérée ;

$R_p$ , le rayon primitif de la roue R1 ou R2 considérée, avec : $R_p = \dfrac{e}{2}$ , où e est l'entraxe nominal de l'engrenage auquel prend part la roue R1 ou R2 dans le cas d'un engrenage de rapport 1 :1 ;

$p_{i1}$, $p_{i2}$, $p_{i3}$, sont des paramètres déterminés sur la base d'algorithmes d'optimisation de façon à ce que le jeu primitif $J$ de l'engrenage auquel prend part la roue $R_i$, à savoir la roue R1 ou R2, est inférieur à $0{,}3 \cdot m$, voire inférieur à $0{,}25 \cdot m$, voire inférieur à $0{,}2 \cdot m$, voire inférieur à $0{,}15 \cdot m$, voire inférieur à $0{,}1 \cdot m$, voire inférieur à $0{,}08 \cdot m$ pour un entraxe e nominal.

Préférentiellement, la longueur de la portion fonctionnelle PF1, PF2 est comprise entre $m$ et $4 \cdot m$.

Une telle portion fonctionnelle PF1, PF2 peut être associée à au moins une autre portion comme une portion de tête de dent PT ou une portion de pied de dent PP de façon à définir un profil complet de dent. Préférentiellement, les portions PP, PF, PT définissent une fonction continue sans cassure entre les différentes portions. Ceci se traduit par une surface de denture ne présentant pas d'arête. Les portions PP, PF et PT peuvent toutes être constituées par des arcs de cercles tangents les uns aux autres.

Avantageusement, la portion de tête de dent PT peut également être définie par un arc de cercle dont le rayon

$r_t$ peut s'exprimer comme suit dans le repère cartésien $(O_1, \vec{e}_x, \vec{e}_y)$ ou $(O_2, \vec{e}_x, \vec{e}_y)$ :

$$r_t = p_{i4}\left(r_u + y_u\right)$$

avec $p_{i4}$, un paramètre déterminé sur la base d'algorithmes d'optimisation de façon à ce que l'engrenage puisse remplir la condition précitée, c'est-à-dire que le jeu primitif $J$ de l'engrenage auquel prend part la roue Ri, à savoir la roue R1 ou R2, est inférieur à $0,3 \cdot m$, voire inférieur à $0,25 \cdot m$, voire inférieur à $0,2 \cdot m$, voire inférieur à $0,15 \cdot m$, voire inférieur à $0,1 \cdot m$, voire inférieur à $0,08 \cdot m$ pour un entraxe $e$ nominal.

Le rayon extérieur ou total $R_e$ de la roue R1 ou R2 qui en découle peut alors s'exprimer de la manière suivante :

$$R_e = x_u + \sqrt{(r_u - r_t)^2 - y_u{}^2} + r_t$$

Les paramètres $p_{i1}, p_{i2}, p_{i3}, p_{i4}$ sont de préférence déterminés sur la base d'algorithmes génétiques qui sont des algorithmes d'optimisation stochastiques fondés sur les mécanismes de la sélection naturelle et de la génétique. Sur la base d'une population de profils potentiels initiaux arbitrairement choisis, leur performance relative en matière, notamment, de jeux angulaires sont évaluées. Sur la base de ces performances, une nouvelle population de profils potentiels est créée en utilisant des opérateurs évolutionnaires, à savoir la sélection, le croisement et la mutation. Ces dernières opérations sont itérées jusqu'à l'apparition d'une solution satisfaisante.

Ainsi, sur la base de ce procédé, il est possible de déterminer des paramètres : $(p_{11}, p_{12}, p_{13}, p_{14})$, $(p_{21}, p_{22}, p_{23}, p_{24})$ caractérisant respectivement des portions PF1, PT1, PF2, PT2 des roues R1, R2 permettant de satisfaire à des objectifs de jeux angulaires pour une variation d'entraxe donnée des roues R1, R2 et un nombrage z1, z2 donné des roues R1, R2.

La portion de pied de dent PP peut être construite dans la continuité du profil. Préférentiellement, la jonction entre la portion PF et la portion PP définit un point d'inflexion PI.

Dans le cas d'un engrenage de rapport 1:1, qui est doté de roues R1 et R2 munies d'un même nombre de dents ($z_1 = z_2$), les dents respectives d1, d2 des roues R1 et R2 peuvent être identiques ou avoir des géométries identiques. En particulier, ces dents respectives peuvent être dotées de portions fonctionnelles PF1, PF2 qui sont identiques, à savoir :

$$(p_{11}, p_{12}, p_{13}) \equiv (p_{21}, p_{22}, p_{23}).$$

Plus spécifiquement, ces dents respectives peuvent être dotées de portions PF1, PT1, PF2, PT2 qui sont identiques, à savoir :

$$(p_{11}, p_{12}, p_{13}, p_{14}) \equiv (p_{21}, p_{22}, p_{23}, p_{24}).$$

Alternativement, dans le cas d'un engrenage de rapport 1:1, les dents respectives desdites roues R1, R2 peuvent être différentes. En particulier, ces dents respectives peuvent être dotées de portions fonctionnelles différentes PF1, PF2. En effet, étant donné que le profil desdites dents n'est pas construit sur la base d'un module m, il est possible de définir les portions fonctionnelles PF1, PF2, et plus spécifiquement les portions PF1, PT1, PF2, PT2, satisfaisant au mieux à des objectifs de jeux angulaires.

Ainsi, dans ce cas :

$$(p_{11}, p_{12}, p_{13}) \not\equiv (p_{21}, p_{22}, p_{23})$$

et, plus spécifiquement :

$$(p_{11}, p_{12}, p_{13}, p_{14}) \not\equiv (p_{21}, p_{22}, p_{23}, p_{24})$$

Les paramètres spécifiques $(p_{i1}, p_{i2}, p_{13}, p_{i4})$ peuvent constituer les coordonnées d'un vecteur $\vec{p}$ spécifique satisfaisant à une condition prédéfinie de jeu primitif $J$ d'un engrenage mettant en oeuvre une roue R1 ou R2.

Les études de la demanderesse montrent par ailleurs qu'il est possible de déterminer un ensemble de vecteurs $\vec{p}$ centré sur un vecteur $\vec{p}^*$ satisfaisant à une condition spécifique de jeu primitif $J$ d'un engrenage donné.

Par exemple, l'ensemble des vecteurs $\vec{p}$ satisfaisant la condition :

$$J < 0{,}3 \cdot m$$

doivent satisfaire la condition suivante :

$$(\vec{p} - \vec{p}^*)^{\mathrm{t}}\, H\, (\vec{p} - \vec{p}^*) \leq 1$$

où $H$ est une matrice de type covariance et $\vec{p}^*$ un vecteur de coordonnées :

$$(p_1^{*}, p_2^{*}, p_3^{*}, p_4^{*}).$$

De manière avantageuse, les roues R1 et R2 peuvent être rigides. Autrement dit, elles ne comportent préférentiellement pas de structure élastique permettant de compenser les jeux angulaires, ni sur les dents, ni sur des bras reliant les dents au moyeu respectif des roues.

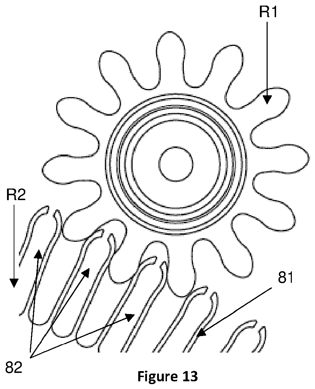

Alternativement, quel que soit le mode de réalisation ou la variante, comme représenté sur la figure 13, au moins une roue R1, R2 peut présenter au moins une structure élastique 81, de façon à ce que les profils PF1, PF2 puissent être définis de sorte à annuler le jeu angulaire sur une plage d'entraxe prédéfini. L'annulation du jeu angulaire, sur une plage d'entraxe donnée, permet une précontrainte minimale de la structure élastique quel que soit l'entraxe, et ainsi une minimisation de l'énergie consommée par l'engrenage.

Préférentiellement, à entraxe e nominal, l'au moins une structure élastique n'est pas actionnée ou précontrainte. Préférentiellement, cette structure élastique est mise en oeuvre par des découpes 82 formées sur tout ou partie des dents de la roue R1 et/ou de la roue R2.

Les roues R1, R2 peuvent être fabriquées par usinage, notamment par taillage. Alternativement, elles peuvent être obtenues par des procédés de micro-usinage comme le gravage, la photolithographie ou des techniques de fabrication additive. Ces dernières techniques présentent l'avantage de reproduire très fidèlement l'arc de cercle caractérisant la portion fonctionnelle PF, et, de manière plus large, la fonction continue caractérisant les portions PP, PF et PT. Avantageusement, la roue R1 ou R2 peut être fabriquée en nickel ou en un alliage de nickel-phosphore, en silicium, en verre, ou en céramique.

Bien entendu, une première roue R1 peut être obtenue par un premier procédé de fabrication, tandis que la deuxième roue R2 peut être obtenue par un deuxième procédé de fabrication. Bien entendu, une première roue R1 peut être fabriquée en un premier matériau, tandis que la deuxième roue R2 peut être fabriquée en un deuxième matériau.

Une première roue R1 ou R2 peut faire partie d'une chaîne de finissage 92 du mouvement horloger 200. Plus particulièrement, une première roue R1 ou R2 peut être intercalée, directement ou indirectement, entre un organe moteur 91 et un organe réglant 93 du mouvement horloger. Par ailleurs, une deuxième roue R1 ou R2 peut être montée en dérivation de ladite chaîne de finissage 92 du mouvement horloger. A titre d'exemple, la figure 4 illustre plus particulièrement une roue R1 faisant partie d'une chaîne de finissage 92 et une roue R2 montée en dérivation de ladite chaîne de finissage.

La roue R1 ou R2 peut être solidaire d'un organe d'affichage O, notamment un organe d'affichage d'une indication horaire ou dérivée de l'heure comme la seconde ou une fraction de seconde. Préférentiellement, cet organe d'affichage comprend une aiguille. Alternativement, l'organe d'affichage peut comprendre un disque. Par « solidaire de », on comprend de préférence « fixé sur ». Toutefois, d'autres liaisons mécaniques peuvent être envisagées. A titre d'exemple, la figure 4 illustre l'organe d'affichage O prenant la forme d'une aiguille, qui est solidaire de la roue R2 montée en dérivation de la chaîne de finissage 92.

A titre d'exemple, le jeu angulaire d'un engrenage E0 constitué de deux roues identiques R10, R20 chacune dotées de 70 dents définies sur la base de la norme NIHS 20-25 et dont le module $m$ est de 0,0726 mm, comme représenté sur les figures 1 et 2, peut être minimisé notamment par le biais d'algorithmes génétiques qui permettent d'identifier des paramètres caractérisant des portions de profils optimisés et de modifier les profils des dents.

La figure 3 illustre un graphique représentant le jeu angulaire de l'engrenage E0 sur un pas angulaire $p$ et pour différents entraxes. On remarque que le jeu angulaire maximal $j_{max}$, à entraxe $e$ nominal, est de l'ordre de 0,4°, ce qui correspond à un jeu primitif $J$ de l'ordre de 0,018 mm, soit environ $0,3 \cdot m$. Par ailleurs, le jeu angulaire peut varier d'une amplitude maximale de l'ordre de 0,65° pour un entraxe variant sur une plage $[e - 40\mu\mathrm{m}, e + 40\mu\mathrm{m}]$. Dans un tel exemple, la sensibilité du jeu angulaire maximal relativement aux variations de l'entraxe est d'environ 8.3°/mm en considérant une plage de variation de l'entraxe de 0.08 mm centrée sur la valeur d'entraxe nominal *(Δjmax/Δe = 8.3°/mm)*.

Les figures 4 à 7 illustrent l'engrenage E1 optimisé du point de vue du jeu angulaire par rapport à E0 et dont les dents respectives des roues R1, R2 sont identiques, avec un profil qui est caractérisé par un vecteur $\vec{p}$ respectant la condition suivante :

$$(\vec{p}-\vec{p}^{*})^{t}\,H\,(\vec{p}-\vec{p}^{*})\leq 1$$

avec :

$$\vec{p}^{*}=\begin{pmatrix}0,30988\\0,16505\\0,17057\\0,46491\end{pmatrix}$$

et

$$H=\begin{pmatrix}841 & 5,15 & -427 & 23\\ & 35,4 & 2,69 & -12,8\\ & & 223 & -17,7\\ \text{sym.} & & & 13,9\end{pmatrix}$$

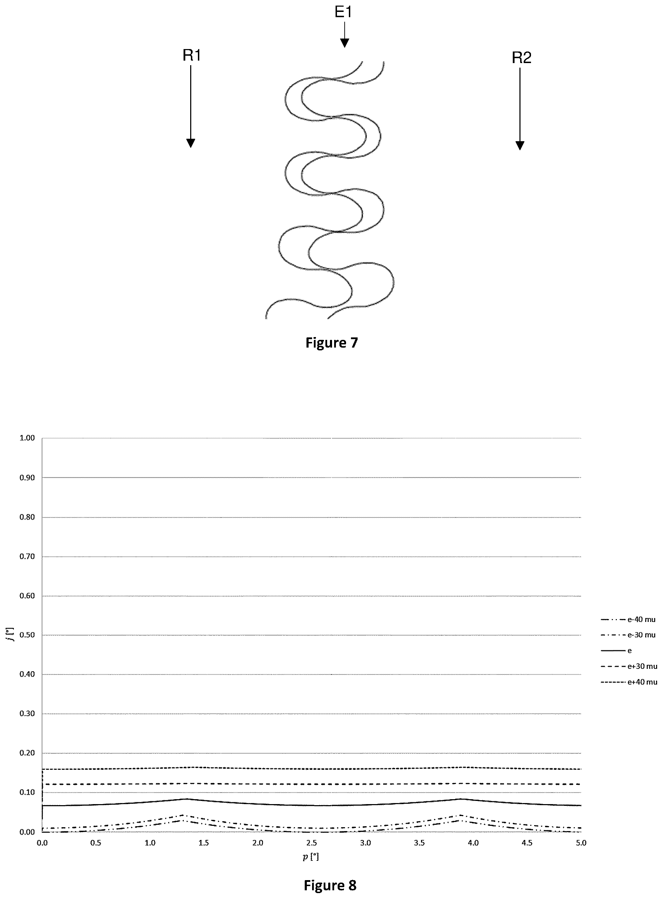

La figure 8 illustre un graphique représentant le jeu angulaire *j* de l'engrenage E1 sur un pas angulaire *p* et pour différents entraxes *e*, pour un vecteur $\vec{p}$ donné respectant la condition précitée. On remarque que le jeu angulaire maximal $j_{max}$, à entraxe *e* nominal, est de l'ordre de 0,08°, soit environ cinq fois plus faible que le jeu $j_{max}$ de l'engrenage E1 des figures 1 et 2. Ainsi, pour ce vecteur $\vec{p}$ particulier, *J* est de l'ordre de 0,06 · *m*. Par ailleurs, dans ce cas particulier, le jeu angulaire peut varier d'une amplitude maximale de l'ordre de 0,18° pour un entraxe variant sur une plage [*e* - 40μm, *e* + 40μm], soit une variation de jeu angulaire près de quatre fois plus faible que celle précitée. Dans un tel exemple, la sensibilité du jeu angulaire maximal relativement aux variations de l'entraxe est d'environ 1.7°/mm en considérant une plage de variation de l'entraxe de 0.08 mm centrée sur la valeur d'entraxe nominal *(Δjmax/Δe = 1.7°/mm)*.

L'exercice a également été fait pour un engrenage constitué de deux roues identiques R1, R2 chacune dotée de 60 dents, avec un profil qui est caractérisé par un vecteur $\vec{p}$ respectant la condition :

$$(\vec{p}-\vec{p}^{*})^{t}\,H\,(\vec{p}-\vec{p}^{*})\leq 1$$

Les gains constatés sont également surprenants, avec *J* de l'ordre de 0,06 · *m* avec un vecteur $\vec{p}$ donnant le meilleur résultat en matière de minimisation du jeu angulaire.

Dans ce cas précis :

$$\vec{p}^{*}=\begin{pmatrix}0,30046\\0,20695\\0,14800\\0,64031\end{pmatrix}$$

$$H = \begin{pmatrix} 3467 & -204 & -1282 & -91 \\ & 96 & 95 & -12,4 \\ & & 496 & -49,6 \\ \text{sym.} & & & 48,5 \end{pmatrix}$$

La figure 9 illustre un engrenage E2 selon un deuxième mode de réalisation optimisé du point de vue du jeu angulaire par rapport à l'engrenage E0, dont les dents respectives des roues R1', R2' sont différentes, avec des dents de la roue R1 ' plus larges que celles de la roue R2'.

Ainsi :

$$\vec{p} = \begin{pmatrix} p_{11} \\ p_{12} \\ p_{13} \\ p_{14} \\ p_{21} \\ p_{22} \\ p_{23} \\ p_{24} \end{pmatrix}$$

avec :

$$(\vec{p} - \vec{p}^*)^{\mathrm{t}} \, H \, (\vec{p} - \vec{p}^*) \leq 1.$$

Dans ce cas précis :

$$\vec{p}^* = \begin{pmatrix} 0,30513 \\ 0,14742 \\ 0,19069 \\ 0,56802 \\ 0,30967 \\ 0,14311 \\ 0,21444 \\ 0,56545 \end{pmatrix}$$

$$H = \begin{pmatrix} 317 & 74,1 & -134 & -0,771 & 207 & -73,7 & -126 & 4,38 \\ & 52,9 & -26,9 & 0,596 & 17,9 & -44 & -17,8 & 1,45 \\ & & 61,8 & -0,163 & -94 & 27,1 & 55,3 & -1,43 \\ & & & 1,06 & -1,06 & -0,789 & 0,79 & -0,194 \\ & & & & 175 & -23,2 & -95 & 2,84 \\ & & & & & 41,3 & 20 & -1,46 \\ & & & & & & 57,6 & -1,74 \\ \text{sym.} & & & & & & & 0,99 \end{pmatrix}$$

La figure 10 illustre un graphique représentant le jeu angulaire de l'engrenage E2 sur un pas angulaire $p$ et pour différents entraxes $e$, pour un vecteur $\vec{p}$ donné. On remarque que le jeu angulaire maximal $j_{max}$ , à entraxe nominal, est de l'ordre de 0,05°, soit environ huit fois plus faible que le jeu angulaire maximal $j_{max}$ défini par l'engrenage des figures 1 et 2. Ainsi, $J$ est de l'ordre de $0,04 \cdot m$. Par ailleurs, dans ce cas particulier, le jeu angulaire peut varier d'une amplitude maximale de l'ordre de 0,1° pour un entraxe variant sur une plage $[e - 30\mu m, e + 30\mu m]$. Dans un tel exemple, la sensibilité du jeu angulaire maximal relativement aux variations de l'entraxe est d'environ 1.1°/mm en considérant une plage de variation de l'entraxe de 0.06 mm centrée sur la valeur d'entraxe nominal ($\Delta jmax/\Delta e$ = 1.1°/mm).

A titre d'exemple encore, le jeu angulaire d'un engrenage E30 non illustré constitué d'un pignon R10" doté de 33 dents défini sur la base d'un profil Treybal connu de l'art antérieur et dont le module $m$ est de 0,0602 mm, menant une roue R20" dotée de 110 dents définie sur la base d'un profil Treybal et dont le module $m$ est de 0,0602 mm, peut notamment être minimisé par le biais d'algorithmes génétiques. Un tel troisième mode de réalisation d'engrenage est désigné E3 et est représenté sur la figure 11. Les profils des dents des roues R1" et R2" de l'engrenage E3 selon le troisième mode de réalisation peuvent être caractérisés par un vecteur $\vec{p}$ respectant la condition $(\vec{p} - \vec{p}^*)^t H (\vec{p} - \vec{p}^*) \le 1$, avec :

$$\vec{p} = \begin{pmatrix} p_{11} \\ p_{12} \\ p_{13} \\ p_{14} \\ p_{21} \\ p_{22} \\ p_{23} \\ p_{24} \end{pmatrix}$$

$$\vec{p}^* = \begin{pmatrix} 0,47511 \\ 0,18843 \\ 0,30192 \\ 0,40574 \\ 0,33041 \\ 0,14158 \\ 0,48232 \\ 0,43577 \end{pmatrix}$$

et :

$$H = \begin{pmatrix} 72,2 & 10,1 & -46,5 & 1,79 & 46,2 & -2,8 & -29,6 & 0,459 \\ & 19,9 & -6,14 & -0,09 & 2.05 & -2,49 & -3,68 & 1,48 \\ & & 34,3 & -0,97 & -30,9 & 2,15 & 19,5 & -0,388 \\ & & & 1,23 & 0,581 & -1,08 & -0,656 & -0,11 \\ & & & & 35,1 & 1,44 & -19,8 & 0,333 \\ & & & & & 6,26 & 0,711 & 0,321 \\ & & & & & & 14,2 & -0,154 \\ \text{sym.} & & & & & & & 1,09 \end{pmatrix}.$$

La figure 12 représente les jeux angulaires maximaux $j_{max}$ des engrenages E30 et E3 sur un pas angulaire $p$ selon une variation $x$ de l'entraxe $e$ nominal desdits engrenages sur une plage [$e$ - 40$\mu$m, $e$ + 60$\mu$m]. Dans un tel exemple d'engrenage E3, la sensibilité du jeu angulaire maximal relativement aux variations de l'entraxe est d'environ 1.7°/mm en considérant une plage de variation de l'entraxe de 0.06 mm centrée sur la valeur d'entraxe nominal ($\Delta jmax/\Delta e$ = 1.7°/mm). On remarque que le jeu angulaire maximal $j_{max}$ de l'engrenage E3, à entraxe nominal, est de l'ordre de 0,2°, soit environ 2,4 fois plus faible que le jeu angulaire maximal $j_{max}$ défini par l'engrenage E30. Sur le plage d'entraxe donnée, la variation du jeu angulaire maximal $j_{max}$ de l'engrenage E3 est par ailleurs de l'ordre de quatre fois plus faible que celle induite par l'engrenage E30. On remarque en outre qu'avec un tel engrenage, la variation d'amplitude au balancier est réduite.

Les engrenages décrits précédemment présentent donc des profils de denture conformés de façon à minimiser le jeu angulaire d'un engrenage horloger, notamment d'un engrenage comprenant une roue montée en dérivation d'une chaîne de finissage. Par ailleurs, la sensibilité de la variation du jeu en fonction de l'entraxe d'engrenage est limitée. Comme vu précédemment, l'invention concerne un procédé de réalisation de l'engrenage E1 ; E2 ; E3 et/ou du mécanisme horloger 100 et/ou du mouvement horloger 200 et/ou de la pièce d'horlogerie 300. Le procédé comprend :

- une étape de détermination des profils des première et deuxième dentures de la première roue R1 ; R1' ; R1" et de la deuxième roue(R2 ; R2' ; R2",
- une étape de mise en forme des première et deuxième roues,
- une étape de montage des première et deuxième roues dentées de sorte qu'elles engrènent l'une avec l'autre.

De préférence, l'étape de détermination des profils des première et deuxième dentures de la première roue R1 et de la deuxième roue R2 comprend, après une étape de sélection, notamment de sélection arbitraire, de profils des première et deuxième dentures, une itération des étapes suivantes :

- détermination des performances des profils des dentures ;
- génération de nouveaux profils de dentures en utilisant des algorithmes génétiques, notamment des algorithmes d'optimisation stochastiques fondés sur les mécanismes de la sélection naturelle et de la génétique et/ou des algorithmes mettant en oeuvre des opérateurs évolutionnaires, à savoir la sélection et/ou le croisement et/ou la mutation.

Dans ce document, par « dent symétrique », on entend qu'il existe une droite passant par l'axe de rotation de la roue et constituant un axe de symétrie du profil de la dent.

Par « roue dentée », on entend toute roue munie d'une denture. Cette définition inclut les pignons. Cette denture peut s'étendre sur 360° ou sur une plage angulaire déterminée. Ainsi, cette définition inclut également tout râteau muni d'un secteur denté. Cette définition inclut également de préférence toute crémaillère. Par « engrenage », on entend tout ensemble comprenant de telles roues dentées.

Par « procédé de réalisation » d'un engrenage, nous entendons un procédé permettant d'aboutir à la définition des profils des première et deuxième dentures des roues prenant part à un tel engrenage, et de mettre en forme ou fabriquer chacune de ces roues.

Comme évoqué précédemment, les jeux angulaires des engrenages objet de l'invention sont de préférence très peu sensibles aux variations d'entraxe. De préférence, dans les différents modes de réalisation décrits précédemment ou selon l'invention, chacune des premières et deuxièmes dents est conformée de sorte que le rapport de la variation de jeu angulaire maximal jmax sur la variation d'entraxe $e$ est inférieur à 6°/mm, voire inférieur à 5°/mm, voire inférieur à 4°/mm, voire inférieur à 3°/mm, pour la valeur d'entraxe variant entre l'entraxe nominal minoré de 0.04 mm et l'entraxe nominal majoré de 0.04 mm. De préférence, les bornes supérieures du rapport mentionnées ci-dessus s'appliquent globalement sur toute la plage mentionnée de variation de l'entraxe. De préférence encore, les bornes supérieures du rapport mentionnées ci-dessus s'appliquent aussi localement sur toute la plage mentionnée de variation de l'entraxe (entraxe nominal minoré de 0.04 mm à entraxe nominal majoré de 0.04 mm), c'est-à-dire que la dérivée du jeu angulaire maximal par rapport à l'entraxe est majorée par la valeur 6°/mm ou 5°/mm ou 4°/mm ou 3°/mm sur toute la plage mentionnée de variation de l'entraxe.

Autrement dit, chacune des premières et deuxièmes dents est conformée de sorte que $\Delta jmax/\Delta e$ est inférieur à 6°/mm, voire inférieur à 5°/mm, voire inférieur à 4°/mm, voire inférieur à 3°/mm, $\Delta jmax$ étant la variation de jeu angulaire maximal *jmax* de l'engrenage et $\Delta e$ étant la variation de l'entraxe de l'engrenage et $\Delta e$ étant inférieur ou égal à 0.08 mm et centré sur la valeur d'entraxe nominal.

De préférence :

- la première roue dentée inclut des premières dents d1 symétriques à l'exclusion de dents à profils de développantes de cercles et/ou de cycloïdes et/ou d'épicycloïdes et/ou d'hypocycloïdes, et/ou
- la deuxième roue dentée inclut des deuxièmes dents d2 symétriques à l'exclusion de dents à profils de développantes de cercles et/ou de cycloïdes et/ou d'épicycloïdes et/ou d'hypocycloïdes.

## Revendications

1. Engrenage (E1 ; E2 ; E3) horloger (100), comprenant une première roue dentée (R1 ; R1' ; R1") montée mobile en rotation autour d'un premier axe (A1) et incluant des premières dents (d1) symétriques et une deuxième roue dentée (R2 ; R2' ; R2") montée mobile en rotation autour d'un deuxième axe (A2) et incluant des deuxièmes dents (d2) symétriques, les premier et deuxième axes étant parallèles ou sensiblement parallèles, chacune des premières et deuxièmes dents étant conformée de sorte que le jeu primitif (*J*) de l'engrenage est inférieur à 0,3 · *m*, voire inférieur à 0,25 · *m*, voire inférieur à 0,2 · *m*, voire inférieur à 0,15 · *m*, voire inférieur à 0,1 · *m*, voire inférieur à 0,08 · *m* pour l'entraxe (*e*) nominal de l'engrenage, avec *m* le module de la roue dont fait partie la dent.

2. Engrenage (E1 ; E2 ; E3) selon la revendication 1, **caractérisé en ce que** chacune des premières et deuxièmes dents est conformée de sorte que le rapport de la variation de jeu angulaire maximal (jmax) sur la variation d'entraxe (*e*) est inférieur à 6°/mm, voire inférieur à 5°/mm, voire inférieur à 4°/mm, voire inférieur à 3°/mm, pour la valeur d'entraxe variant entre l'entraxe nominal minoré de 0.04 mm et l'entraxe nominal majoré de 0.04 mm.

3. Engrenage (E1 ; E2 ; E3) selon la revendication 1 ou 2, **caractérisé en ce que** chacune des premières et deuxièmes dents comprend un profil (P1 ; P2) dans un plan perpendiculaire (P) à un axe (A1 ; A2) de la roue dentée dont fait partie la dent, le profil comprenant une portion fonctionnelle (PF1 ; PF2) ayant une forme d'un premier arc de cercle, le premier arc de cercle étant défini par :

   - un rayon ($r_u$), et
   - un centre (C1 ; C2) de coordonnées ($x_u$, $y_u$) dans un repère cartésien orthonormé direct ($O_1$, $\vec{e}_x$, $\vec{e}_y$ ; $O_2$, $\vec{e}_x$, $\vec{e}_y$) centré sur l'axe de la roue dentée dont fait partie la dent, $\vec{e}_x$ étant un vecteur unitaire colinéaire à un axe (S1 ; S2) de symétrie de la dent,

   avec :

$$r_u = p_{i1} \frac{2\,\pi\,R_p}{z}\,,$$

$$x_u = p_{i2}\,r_u + R_p\,,$$

$$y_u = -p_{i3}\,r_u$$

   *z* : le nombre de dents de la roue dont fait partie la dent ;
   $R_p$, le rayon primitif de la roue R1 ou R2 considérée ;

$p_{i1}$, $p_{i2}$, $p_{i3}$: des paramètres déterminés de façon à ce que le jeu primitif ($J$) de l'engrenage est inférieur à 0,3 · $m$, voire inférieur à 0,25 · $m$, voire inférieur à 0,2 · $m$, voire inférieur à 0,15 · $m$, voire inférieur à 0,1 · $m$, voire inférieur à 0,08 · m pour l'entraxe ($e$) nominal de l'engrenage, avec $m$ le module de la roue dont fait partie la dent.

4. Engrenage (E1 ; E2 ; E3) selon l'une des revendications précédentes, **caractérisé en ce que** le profil comprend une portion de tête de dent (PT1 ; PT2) ayant une forme d'un deuxième arc de cercle, le deuxième arc de cercle étant notamment défini par un rayon ($r_t$) déterminé comme suit :

$$r_t = p_{i4} \, (r_u + y_u)$$

avec :

$p_{i4}$ : un paramètre déterminé de façon à ce que le jeu primitif ($J$) de l'engrenage est inférieur à 0,3 · $m$, voire inférieur à 0,25 · $m$, voire inférieur à 0,2 · $m$, voire inférieur à 0,15 · $m$, voire inférieur à 0,1 · $m$, voire inférieur à 0,08 · $m$ pour l'entraxe ($e$) nominal de l'engrenage, avec $m$ le module de la roue dont fait partie la dent.

5. Engrenage (E1 ; E2 ; E3) selon l'une des revendications précédentes, **caractérisé en ce que** les paramètres ($p_{i1}$,$p_{i2}$,$p_{13}$,$p_{i4}$) constituent les coordonnées d'un premier vecteur ($\vec{p}$) satisfaisant la condition suivante :

$$(\vec{p} - \vec{p}^{*})^t \, H \, (\vec{p} - \vec{p}^{*}) \leq 1$$

avec :

$H$ : une matrice de type covariance, et
$\vec{p}^{*}$ : un vecteur de coordonnées ($p_1^{*}$,$p_2^{*}$,$p_3^{*}$,$p_4^{*}$).

6. Engrenage selon l'une des revendications précédentes, **caractérisé en ce que** :

- le rapport d'engrenage est égal à 1 et/ou les première et deuxième roues sont munies d'un même nombre de dents, et
- les dents des première et deuxième roues ont la même géométrie, ou **en ce que** :
- le rapport d'engrenage est égal à 1 et/ou les première et deuxième roues sont munies d'un même nombre de dents, et
- les dents des première et deuxième roues ont des géométries différentes.

7. Engrenage (E1 ; E2 ; E3) selon l'une des revendications précédentes, **caractérisé en ce que** la première roue et/ou la deuxième roue est solidaire d'un organe d'affichage (O) et/ou **en ce que** la première roue et/ou la deuxième roue est destinée à faire partie d'une chaîne de finissage (92) d'un mouvement horloger (200), en particulier, est destinée à être intercalée, directement ou indirectement, entre un organe moteur (91) et un organe réglant (93) d'un mouvement horloger (200) et/ou **en ce que** la première roue et/ou la deuxième roue est destinée à être montée en dérivation d'une chaîne de finissage (92) d'un mouvement horloger (200).

8. Engrenage (E1 ; E2 ; E3) selon l'une des revendications 1 à 7, **caractérisé en ce que** les première et deuxième roues sont rigides.

9. Engrenage (E1 ; E2 ; E3) selon l'une des revendications 1 à 7, **caractérisé en ce qu'**au moins l'une des première et deuxième roues comprend une structure élastique (81) de compensation de jeu angulaire, notamment une structure élastique constituée par au moins une découpe (82) d'une roue.

10. Engrenage (E1 ; E2 ; E3) selon la revendication précédente, **caractérisé en ce que** la structure élastique de compensation de jeu angulaire n'est pas sollicitée à entraxe nominal.

11. Mécanisme horloger (100), en particulier mécanisme horloger d'affichage d'une information temporelle ou dérivée du temps ou non liée au temps, comprenant un engrenage (E1 ; E2 ; E3) selon l'une des revendications précédentes.

**12.** Mouvement horloger (200), comprenant un engrenage (E1 ; E2 ; E3) selon l'une des revendications 1 à 10 et/ou un mécanisme horloger (100) selon la revendication précédente.

**13.** Pièce d'horlogerie (300), comprenant un engrenage (E1 ; E2 ; E3) selon l'une des revendications 1 à 10 et/ou un mécanisme horloger (100) selon la revendication 11 et/ou un mouvement horloger (200) selon la revendication 12.

**14.** Procédé de réalisation d'un engrenage (E1 ; E2 ; E3) selon l'une des revendications 1 à 10 et/ou d'un mécanisme horloger (100) selon la revendication 11 et/ou d'un mouvement horloger (200) selon la revendication 12 et/ou d'une pièce d'horlogerie (300) selon la revendication 13, **caractérisé en ce qu'**il comprend :

- une étape de détermination des profils des première et deuxième dentures de la première roue (R1 ; R1' ; R1") et de la deuxième roue (R2 ; R2' ; R2"),
- une étape de mise en forme des première et deuxième roues, incluant des premières (d1) et deuxièmes dents (d2) symétriques
- une étape de montage des première et deuxième roues dentées de sorte qu'elles engrènent l'une avec l'autre avec un jeu primitif inférieur à 0.3*m, avec m le module de la roue dont fait partie la dent.

**15.** Procédé selon la revendication précédente, **caractérisé en ce que** l'étape de détermination des profils des première et deuxième dentures de la première roue (R1) et de la deuxième roue (R2) comprend, après une étape de sélection, notamment de sélection arbitraire, de profils des première et deuxième dentures, une itération des étapes suivantes :

- détermination des performances des profils des dentures ;
- génération de nouveaux profils de dentures en utilisant des algorithmes génétiques, notamment des algorithmes d'optimisation stochastiques fondés sur les mécanismes de la sélection naturelle et de la génétique et/ou des algorithmes mettant en oeuvre des opérateurs évolutionnaires, à savoir la sélection et/ou le croisement et/ou la mutation.


**Patentansprüche**

**1.** Zahnradgetriebe (E1; E2; E3) einer Uhr (100), das ein erstes Zahnrad (R1; R1'; R1"), das drehbeweglich um eine erste Achse (A1) montiert ist und erste symmetrische Zähne (d1) umfasst, und ein zweites Zahnrad (R2; R2'; R2") enthält, das drehbeweglich um eine zweite Achse (A2) montiert ist und zweite symmetrische Zähne (d2) umfasst, wobei die ersten und zweiten Achsen parallel oder im Wesentlichen parallel sind, wobei jeder der ersten und zweiten Zähne so gestaltet ist, dass das Verdrehflankenspiel ($J$) des Zahnradgetriebes geringer ist als $0{,}3 \cdot m$, sogar geringer als $0{,}25 \cdot m$, sogar geringer als $0{,}2 \cdot m$, sogar geringer als $0{,}15 \cdot m$, sogar geringer als $0{,}1 \cdot m$, sogar geringer als $0{,}08 \cdot m$ für den Nennachsabstand ($e$) des Zahnradgetriebes, mit $m$ dem Modul des Rads, zu dem der Zahn gehört.

**2.** Zahnradgetriebe (E1; E2; E3) nach Anspruch 1, **dadurch gekennzeichnet, dass** jeder der ersten und zweiten Zähne so gestaltet ist, dass das Verhältnis der maximalen Winkelspieländerung (jmax) zur Achsabstandänderung ($e$) geringer ist als 6°/mm, sogar geringer als 5°/mm, sogar geringer als 4°/mm, sogar geringer als 3°/mm, für den Achsabstandswert variierend zwischen dem Nennachsabstand verringert um 0.04 mm und dem Nennachsabstand erhöht um 0.04 mm.

**3.** Zahnradgetriebe (E1; E2; E3) nach Anspruch 1 oder 2, **dadurch gekennzeichnet, dass** jeder der ersten und zweiten Zähne ein Profil (P1; P2) in einer Ebene (P) lotrecht zu einer Achse (A1; A2) des Zahnrads enthält, zu dem der Zahn gehört, wobei das Profil einen funktionalen Teil (PF1; PF2) enthält, der eine Form eines ersten Kreisbogens hat, wobei der erste Kreisbogen definiert wird durch:

- einen Radius ($r_u$), und
- ein Zentrum (C1; C2) von Koordinaten ($x_u$, $y_u$) in einem direkten orthonormierten kartesischen Koordinatensystem ($O_1$, $\vec{e}_x$, $\vec{e}_y$; $O_2$, $\vec{e}_x$, $\vec{e}_y$) zentriert auf die Achse des Zahnrads, zu dem der Zahn gehört, wobei $\vec{e}_x$ ein Einheitsvektor kolinear zu einer Symmetrieachse (S1; S2) des Zahns ist, mit:

$$r_u = p_{i1} \frac{2\pi R_p}{z},$$

$$x_u = p_{i2} r_u + R_p,$$

$$y_u = -p_{i3} r_u$$

z: die Anzahl der Zähne des Rads, zu dem der Zahn gehört; $R_\mathrm{p}$, der Teilungsradius des betrachteten Rads R1 oder R2; $p_{i1}$, $p_{i2}$, $p_{i3}$: Parameter, die so bestimmt sind, dass das Verdrehflankenspiel ($J$) des Zahnradgetriebes geringer ist als 0,3·$m$, sogar geringer als 0,25·$m$, sogar geringer als 0,2·$m$, sogar geringer als 0,15·$m$, sogar geringer als 0,1· m, sogar geringer als 0,08·$m$ für den Nennachsabstand ($e$) des Zahnradgetriebes, mit $m$ dem Modul des Rads, zu dem der Zahn gehört.

4. Zahnradgetriebe (E1; E2; E3) nach einem der vorhergehenden Ansprüche, **dadurch gekennzeichnet, dass** das Profil einen Zahnkopfteil (PT1; PT2) enthält, der eine Form eines zweiten Kreisbogens hat, wobei der zweite Kreisbogen insbesondere durch einen wie folgt bestimmten Radius ($r_\mathrm{t}$) definiert wird:

$$r_t = p_{i4} (r_u + y_u)$$

mit:

$p_{i4}$: ein derart bestimmter Parameter, dass das Verdrehflankenspiel ($J$) des Zahnradgetriebes geringer ist als 0,3·$m$, sogar geringer als 0,25·$m$, sogar geringer als 0,2·$m$, sogar geringer als 0,15·$m$, sogar geringer als 0,1· m, sogar geringer als 0,08·$m$ für den Nennachsabstand ($e$) des Zahnradgetriebes, mit $m$ dem Modul des Rads, zu dem der Zahn gehört.

5. Zahnradgetriebe (E1; E2; E3) nach einem der vorhergehenden Ansprüche, **dadurch gekennzeichnet, dass** die Parameter ($p_{i1}$, $p_{i2}$, $p_{i3}$, $p_{i4}$) die Koordinaten eines ersten Vektors ($\vec{p}$) bilden, der die folgende Bedingung erfüllt:

$$(\vec{p} - \vec{p}^\star)^t H (\vec{p} - \vec{p}^\star) \leq 1$$

mit:

$H$: eine Matrix vom Typ Kovarianz, und

$\vec{p}^\star$: ein Koordinatenvektor ( $p_1^\star, p_2^\star, p_3^\star, p_4^\star$ ).

6. Zahnradgetriebe nach einem der vorhergehenden Ansprüche, **dadurch gekennzeichnet, dass**:

- das Übersetzungsverhältnis gleich 1 ist und/oder die ersten und zweiten Räder mit einer gleichen Anzahl von Zähnen versehen sind, und
- die Zähne der ersten und zweiten Räder die gleiche Geometrie haben,

oder dass:

- das Übersetzungsverhältnis gleich 1 ist und/oder die ersten und zweiten Räder mit einer gleichen Anzahl von Zähnen versehen sind, und
- die Zähne der ersten und zweiten Räder unterschiedliche Geometrien haben.

7. Zahnradgetriebe (E1; E2; E3) nach einem der vorhergehenden Ansprüche, **dadurch gekennzeichnet, dass** das erste Rad und/oder das zweite Rad fest mit einem Anzeigeorgan (O) verbunden ist, und/oder dass das erste Rad und/oder das zweite Rad dazu bestimmt ist, zu einer Finissage-Kette (92) eines Uhrwerks (200) zu gehören, insbesondere dazu bestimmt ist, direkt oder indirekt zwischen ein Antriebsorgan (91) und ein Regulierorgan (93) eines Uhrwerks (200) eingefügt zu werden, und/oder dass das erste Rad und/oder das zweite Rad dazu bestimmt ist, in Abzweigung einer Finissage-Kette (92) eines Uhrwerks (200) montiert zu werden.

8. Zahnradgetriebe (E1; E2; E3) nach einem der Ansprüche 1 bis 7, **dadurch gekennzeichnet, dass** die ersten und zweiten Räder starr sind.

9. Zahnradgetriebe (E1; E2; E3) nach einem der Ansprüche 1 bis 7, **dadurch gekennzeichnet, dass** mindestens eines der ersten und zweiten Räder eine elastische Struktur (81) zur Kompensation eines Winkelspiels enthält, insbesondere eine elastische Struktur, die aus mindestens einem Ausschnitt (82) eines Rads besteht.

10. Zahnradgetriebe (E1; E2; E3) nach dem vorhergehenden Anspruch, **dadurch gekennzeichnet, dass** die elastische Struktur zur Kompensation eines Winkelspiels bei Nennachsabstand nicht beansprucht wird.

11. Uhrenmechanismus (100), insbesondere Uhrenmechanismus zur Anzeige einer zeitlichen oder von der Zeit abgeleiteten oder nicht mit der Zeit verbundenen Information, der ein Zahnradgetriebe (E1; E2; E3) nach einem der vorhergehenden Ansprüche enthält.

12. Uhrwerk (200), das ein Zahnradgetriebe (E1; E2; E3) nach einem der Ansprüche 1 bis 10 und/oder einen Uhrenmechanismus (100) nach dem vorhergehenden Anspruch enthält.

13. Uhr (300), die ein Zahnradgetriebe (E1; E2; E3) nach einem der Ansprüche 1 bis 10 und/oder einen Uhrenmechanismus (100) nach Anspruch 11 und/oder ein Uhrwerk (200) nach Anspruch 12 enthält.

14. Verfahren zur Herstellung eines Zahnradgetriebes (E1; E2; E3) nach einem der Ansprüche 1 bis 10 und/oder eines Uhrenmechanismus (100) nach Anspruch 11 und/oder eines Uhrwerks (200) nach Anspruch 12 und/oder einer Uhr (300) nach Anspruch 13, **dadurch gekennzeichnet, dass** es enthält:

   - einen Schritt der Bestimmung der Profile der ersten und zweiten Verzahnungen des ersten Rads (R1; R1'; R1") und des zweiten Rads (R2; R2'; R2"),
   - einen Schritt der Formung der ersten und zweiten Räder, einschließlich erster (d1) und zweiter symmetrischer Zähne (d2),
   - einen Schritt der Montage der ersten und zweiten Zahnräder derart, dass sie mit einem Verdrehflankenspiel geringer als 0.3*m ineinandergreifen, mit m dem Modul des Rads, zu dem der Zahn gehört.

15. Verfahren nach dem vorhergehenden Anspruch, **dadurch gekennzeichnet, dass** der Schritt der Bestimmung der Profile der ersten und zweiten Verzahnungen des ersten Rads (R1) und des zweiten Rads (R2) nach einem Schritt der Auswahl, insbesondere einer willkürlichen Auswahl, von Profilen der ersten und zweiten Verzahnungen eine Iteration der folgenden Schritte enthält:

   - Bestimmung der Leistungen der Profile der Verzahnungen;
   - Erzeugung neuer Profile von Verzahnungen unter Verwendung genetischer Algorithmen, insbesondere stochastischer Optimierungsalgorithmen, die auf den Mechanismen der natürlichen Auswahl und der Genetik beruhen, und/oder von Algorithmen, die evolutionäre Operatoren anwenden, nämlich die Auswahl und/oder die Kreuzung und/oder die Mutation.

**Claims**

1. A horological gearing (E1; E2; E3) comprising a first toothed wheel (R1; R1'; R1") mobile in rotation about a first axis (A1) and including first symmetrical teeth (d1) and a second toothed wheel (R2; R2'; R2") mobile in rotation about a second axis (A2) and including second symmetrical teeth (d2), the first and second axis being parallel or substantially parallel, each of the first and second teeth being conformed so that the primitive backlash ($J$) of the gearing is less than $0.3 \cdot m,$ or even less than $0.25 \cdot m,$ or even less than $0.2 \cdot m$, or even less than $0.15 \cdot m$, or even less than $0.1 \cdot m$, or even less than $0.08 \cdot m$ for the nominal axial center distance ($e$) of the gearing, where m is the modulus of the wheel of which the tooth forms part.

2. The gearing (E1; E2; E3) as claimed in claim 1, wherein each of the first teeth and of the second teeth is conformed such that the ratio of the variation of maximum angular backlash (jmax) to the variation of the gearing axial center distance (e) is less than 6°/mm or less than 5°/mm or less than 4°/mm or less than 3°/mm for a gearing axial center distance value varying between the nominal gearing axial center distance minus 0.04 mm and the nominal gearing axial center distance plus 0.04 mm.

3. The gearing (E1; E2; E3) as claimed in claim 1 or 2, wherein each of the first and second teeth comprises a profile (P1; P2) in a plane (P) perpendicular to an axis (A1; A2) of the toothed wheel of which the tooth forms part, the profile comprising a functional portion (PF1; PF2) having the shape of a first circular arc, the first circular arc being defined by:

- a radius ($r_u$ ), and
- a center (C1; C2) of coordinates ($x_u$, $y_u$) in a direct orthonormal Cartesian system of axes ($O_1$, $\vec{e}_x$, $\vec{e}_y$; $O_2$, $\vec{e}_x$, $\vec{e}_y$) centered on the axis of the toothed wheel of which the tooth forms part, $\vec{e}_x$ being a unit vector colinear with an axis (S1; S2) of symmetry of the tooth, with:

$$r_u = p_{i1} \frac{2 \pi R_p}{z} ,$$

$$x_u = p_{i2} r_u + R_p ,$$

$$y_u = -p_{i3} r_u$$

$z$ : the number of teeth on the wheel of which the tooth forms part;
$R_p$, the primitive radius of the wheel R1 or R2 concerned;
$p_{i1}$, $p_{i2}$, $p_{i3}$: parameters determined so that the primitive backlash ($J$ ) of the gearing is less than $0.3 \cdot m$, or even less than $0.25 \cdot m$, or even less than $0.2 \cdot m$, or even less than $0.15 \cdot m$, or even less than $0.1 \cdot m$, or even less than $0.08 \cdot m$ for the nominal axial center distance ($e$) of the gearing, when $m$ is the modulus of the wheel on which the tooth forms part.

4. The gearing (E1; E2; E3) as claimed in one of the preceding claims, wherein the profile comprises a tooth head portion (PT1; PT2) having the shape of a second circular arc, the second circular arc being in particular defined by a particular radius ($r_t$) as follows:

$$r_t = p_{i4} (r_u + y_u)$$

with :
$p_{i4}$ : a parameter determined so that the primitive backlash ($J$) of the gearing is less than $0.3 \cdot m$, or even less than $0.25 \cdot m$, or even less than $0.2 \cdot m$, or even less than $0.15 \cdot m$, or even less than $0.1 \cdot m$, or even less than $0.08 \cdot m$ for the nominal axial center distance ($e$) of the gearing, when $m$ is the modulus of the wheel on which the tooth forms part.

5. The gearing (E1; E2; E3) as claimed in any one of the preceding claims, wherein the parameters ($p_{i1}$,$p_{i2}$,$p_{13}$,$p_{i4}$) constitute the coordinates of a first vector ($\vec{p}$) satisfying the following condition:

$$(\vec{p} - \vec{p}^*)^t H (\vec{p} - \vec{p}^*) \leq 1$$

with:

$H$: a covariance type matrix, and
$\vec{p}^*$: a vector with coordinates ($p_1{}^*$,$p_2{}^*$,$p_3{}^*$,$p_4{}^*$).

6. The gearing as claimed in any one of the preceding claims, wherein:

- the gearing ratio is equal to 1 and/or the first and second wheels have the same number of teeth, and

- the teeth of the first and second wheels have the same geometry, or wherein:
- the gearing ratio is equal to 1 and/or the first and second wheels have the same number of teeth, and
- the teeth of the first and second wheels have different geometries.

7. The gearing (E1; E2; E3) as claimed in any one of the preceding claims, wherein the first wheel and/or the second wheel is or are secured to a display member (O) and/or wherein the first wheel and/or the second wheel is or are intended to form part of a geartrain (92) of a horological movement (200), and in particular is intended to be interleaved, directly or indirectly, between a driving member (91) and a member (93) adjusting a horological movement (200), and/or wherein the first wheel and/or the second wheel is or are intended to be mounted in parallel coupling with a geartrain (92) of a horological movement (200).

8. The gearing (E1; E2; E3) as claimed in any one of claims 1 to 7, wherein the first and second wheels are rigid.

9. The gearing (E1; E2; E3) as claimed in any one of claims 1 to 7, wherein at least one of the first and second wheels comprises an elastic angular-backlash-compensation structure (81), in particular an elastic structure consisting of at least one cut-out (82) in a wheel.

10. The gearing (E1; E2; E3) as claimed in the preceding claim, wherein the angular-backlash-compensation elastic structure is not loaded at the nominal axial center distance.

11. A horological mechanism (100), in particular a horological mechanism for displaying time information or information derived from time or not time related, comprising a gearing (E1; E2; E3) as claimed in any one of the preceding claims.

12. A horological movement (200) comprising a gearing (E1; E2; E3) as claimed in any one of claims 1 to 10 and/or a horological mechanism (100) as claimed in the preceding claim.

13. A timepiece (300) comprising a gearing (E1; E2; E3) as claimed in any one of claims 1 to 10 and/or a horological mechanism (100) as claimed in claim 11 and/or a horological movement (200) as claimed in claim 12.

14. A method of manufacturing a gearing (E1; E2; E3) as claimed in any one of claims 1 to 10 and/or a horological mechanism (100) as claimed in claim 11 and/or a horological movement (200) as claimed in claim 12 and/or a timepiece (300) as claimed in claim 13, wherein it comprises:

- a step of determination of the profiles of the first and second toothings of the first wheel (R1; R1'; R1") and of the second wheel (R2; R2'; R2"),
- a step of shaping the first and second wheels, including first symmetrical teeth (d1) and second symmetrical teeth (d2),
- a step of mounting the first and second toothed wheels so that they mesh with one another with a primitive backlash being less than $0.3 \cdot m$ where m is the modulus of the wheel of which the tooth forms part.

15. The method as claimed in the preceding claim, wherein the step of determining the profiles of the first and second toothings of the first wheel (R1) and of the second wheel (R2) comprises, after a step of selection, in particular a step of arbitrary selection, of profiles of the first and second toothings, iteration of the following steps:

- determination of the performance of the profiles of the toothings;
- generation of new toothing profiles using genetic algorithms, in particular stochastic optimization algorithms based on mechanisms of natural selection and of genetics and/or algorithms employing evolutionary operators, namely selection and/or crossing and/or mutation.

Figure 1

Figure 2

**Figure 3**

**Figure 4**

Figure 5

Figure 6

**Figure 7**

**Figure 8**

Figure 9

Figure 10

Figure 11

Figure 12

**Figure 13**

## RÉFÉRENCES CITÉES DANS LA DESCRIPTION

**Documents brevets cités dans la description**

- CH 506824
- EP 0482443 A
- EP 2453321 A
- EP 1555584 A
- EP 2053474 A
- WO 2017157764 A